# EUROPEAN PATENT SPECIFICATION

(11) **EP 2 021 248 B1**
(45) Date of publication and mention of the grant of the patent: **12.05.2010**
(21) Application number: 07725612.1
(22) Date of filing: 28.05.2007
(51) Int. Cl.: B65B 11/52, B65B 61/06, B65B 61/18, B65B 61/26, B23K 26/40

(54) **VACUUM SKIN PACKAGING APPARATUS AND PROCESS**
VAKUUMSKINVERPACKUNGSVORRICHTUNG UND -VERFAHREN
APPAREIL ET PROCÉDÉ D'EMBALLAGE MOULANT SOUS VIDE

(30) Priority: 30.05.2006 EP 06011056
(43) Date of publication of application: 11.02.2009
(73) Proprietor: Cryovac, Inc., Duncan, SC 29334 (US)
(72) Inventor: GRANILI, Andrea, 20020 Lainate (IT); EVANGELISTI, Riccardo, 20151 Milan (IT)
(74) Representative: De Carli, Elda
(86) International application number: PCT/EP2007/004717
(87) International publication number: WO 2007/137804

(56) References cited:
- WO-A-98/16430
- WO-A-03/062085
- WO-A-2004/074106
- FR-A- 2 802 509

## Description

The present invention relates to a Vacuum Skin packaging apparatus for the vacuum packaging of an article or product by enclosing it between two webs, or layers, of thermoplastic material that tightly contour the article or product as a "skin". More in particular, the present invention relates to a VSP packaging apparatus provided with a cutting device comprising a laser source. Moreover the present invention also relates to a VSP packaging process that can suitably run on the above packaging apparatus.

Packages wherein an article, for instance a food product or the like is enclosed between two webs of thermoplastic material, are well known. Generally, the so packaged food product is tightly sealed so as to protect it from abuse and exterior contamination during storage, shipment and display.

Presently, a wide variety of products, particularly food products, are being offered in visually attractive packages made of two superposed thermoplastic webs, a lower or bottom web and an upper or top web. Generally, the top web is transparent while the bottom web is properly colored and shaped and operates as a support for the packaged product. The package is made by different methods and apparatus including, among the most popular ones, the vacuum skin packaging method and the corresponding vacuum skin packaging apparatus.

In said apparatus, the lower, supporting, web has preferably a tray-like configuration defining a receptacle for the article to be packaged having an opening and a rim formed on the periphery of said opening. Said tray-like configuration is generally obtained by a thermoforming step, either in-line or off-line. Generally, more than one product is arranged side-by side, while a certain gap is maintained between the products. In other words, transversely to the apparatus work direction, there are two or more products that are handled at the same time.

The upper web is generally drawn into a concave mold cavity formed into a vertically movable heated upper dome so that it is heated while held by suction in contact with the heated ceiling and walls of the cavity. Vacuum is applied also on the lower web to keep it in place during the following step. Then, the vacuumization of the space between the upper and lower webs in the vacuum packaging chamber and the release of the suction applied to the cavity walls of the mold plate draws the upper web downwardly to contact with the contours of the product article and with the lower web. The upper web thus forms a tight skin all around the product to be packed and is bonded to the lower web by differential air pressure, thus sealing wherever the upper, still hot, web contacts the lower one.

After the skin station, a cutting station is provided wherein a punching unit properly cuts the packed products in separate packages.

A conventional punching unit for the above mentioned vacuum skin packaging apparatus comprises a first transversal cutting knife which operates a transversal cut. In this manner, a band of vacuum skin packaged products is obtained. The transversal cutting knife operates from a position below the webs and cooperates with a holder up device. The punching unit also comprises one or more rotating blades performing longitudinal cuts. In this manner, single vacuum skin packaged products are separated in rectangular packages. Such a vacuum skin packaging apparatus is known from WO 2004/07416.

A similar punching unit has the disadvantage that it is only able to generate rectangular shape packages. Moreover, the cutting tools (cutting knife and rotating blade) should be maintained sharp, otherwise the cuts are not properly performed.

It is also known to cut the vacuum skin packaged products by a projecting blade performing a predetermined path through transmission gears.

Whilst the projecting blade arrangement allows performing also cuts which are not longitudinal or transverse, it is expensive and complex. It can not be adapted to new shapes of the products. In other words, it is impossible to change, for instance, from a triangular shape package to a rectangular shape one. Furthermore it cannot be employed when the products to be packaged project more than about 25 mm from the plane of the tray rim.

It requires careful maintenance and, again, the cutting tools should be maintained sharp otherwise the cuts are not properly performed.

In addition, the projecting blade arrangement is not adapted to cut thin webs. There is a high risk to produce waves and curlings in the cutting area.

It is also known to cut the vacuum skin packaged products by a so-called "strip punch" system which allows shaping of the package in the cross direction (i.e., realizing curved pack sides in the cross direction) but not in the longitudinal one. Such a system has the additional limitation that it is not suitable for total thickness (superimposed upper and lower webs) exceeding 400 µm.

For the sake of completeness it is also known to cut the VSP packages by a punching system (male-female concept), and by a die cut system. Both these methods are devoid of any flexibility and suffer from the same limitations seen above.

In view of the above, the Applicant has felt the need to provide a novel vacuum skin packaging apparatus which contains a cutting device more efficient and flexible (in terms, for instance, of shapes which can be cut) than the known punching units and blade arrangements.

Profitably, the cutting device used in the VSP packaging apparatus according to the present invention can perform also other operations, such as additional sealing of the bottom and top webs and/or marking or engraving.

WO 03/062085 describes a process for cutting or perforating PVOH containers by applying a laser beam. The containers are made by vacuum forming or thermoforming a base PVOH web and are sealed by placing a top web film on top of the filled pocket and heat-sealing it to the base web.

According to a first aspect, the present invention provides a vacuum skin packaging apparatus for vacuum skin packaging products and obtaining packets by a single skin cycle, which apparatus comprises a loading station wherein the products to be packaged are arranged on a bottom thermoplastic web, the products being suitably spaced arranged; a skin station wherein i) a top thermoplastic web is positioned above the products, ii) the top thermoplastic web is heated, iii) a vacuum between the top thermoplastic web and the bottom thermoplastic web is applied and iv) the top thermoplastic web is drawn over and all around the products thus sealing wherever the two webs contact each other; and a cutting station wherein the packaged products are separated by cutting the superimposed and sealed webs; said VSP apparatus being **characterized in that** the cutting station contains a cutting device which comprises a laser source producing a laser beam at a first optical power and means for directing the laser beam at the first optical power towards the area where the two webs contact each other in a manner that the reflected laser beam at the first optical power follows a predetermined path so that the two webs become cut and the products become packaged singularly.

The means for directing the laser beam typically comprises at least a mirror and at least a motor.

Preferably a beam expander is employed to guarantee a constant focus of the laser beam along the cutting path.

The cutting device may further comprise a computer driving the operation of the at least one motor for changing speed of the emitted laser beam accordingly.

The laser source is profitably adapted to emit a laser beam at a second optical power.

The laser source is profitably powered by a power supply providing at least a first electrical power and a second electrical power so that the laser source emits at least the laser beam at the first optical power and the second laser beam at the second optical power.

According to one embodiment, means are provided for modifying the emitted laser beam pulse frequency.

The cutting device may further comprise an artificial vision device detecting at least one of the size, the shape and the arrangement of the products and feeding such information to the computer in order to generate a proper cutting path.

The cutting device may be also adapted to cut small cuts for providing an easy to open packet.

The cutting device may be also adapted to provide a safety sealing along at least a portion of the packet edge.

The cutting device may be also adapted to mark a logo or text matter on at least one of the webs covering the product.

The cutting device may be also adapted to mark a date and/or a bar code on at least one of the webs covering the product.

According to a second aspect, the present invention provides a process for vacuum skin packaging products and obtaining packets by a single skin cycle, which process comprises: placing the products to be packaged on a bottom thermoplastic web, the products being suitably spaced arranged; positioning a top thermoplastic web above the products; heating the top thermoplastic web; drawing a vacuum between the top thermoplastic web and the bottom thermoplastic web; drawing the top thermoplastic web over and all around the products, thus sealing wherever the two webs contact each other; and separating the packaged products by cutting the superimposed and sealed webs; said process being **characterized in that** the cutting is performed by directing a laser beam by at least a mirror and at least a motor.

The process may further comprise driving the operation of the at least one motor by a computer for changing the speed of the emitted laser beam accordingly.

The laser source for the laser beam is preferably powered by a power supply providing at least a first electrical power and a second electrical power so that the laser source emits at least a laser beam at a first optical power and a second laser beam at a second optical power.

The process further preferably comprises modifying an emitted laser beam pulse frequency.

The process preferably further comprises detecting at least one of a size, a shape and an arrangement of the products by an artificial vision device and feeding such information to the computer in order to generate a proper cutting path

The cutting preferably comprises cutting small cuts for providing easy to open packets.

The process may further provides a safety sealing made by the laser along at least a portion of the packet edge.

The process may comprise laser marking a logo, text matter, a date or a code on at least one of the webs covering the product.

The thermoplastic bottom web is preferably thermoformed in-line, before placing thereon the products to be packaged, to a tray with a secondary flange.

The laser cutting step is preferably performed so as to leave a skirt around the secondary flange ≤ 2 mm. This would provide a "cleaner" package, i.e., a package with less plastic material. By changing cutting path it is anyway possible to adapt the amount of material around the secondary flange depending on the specific purposes.

The present invention will become fully clear after reading the following detailed description with reference to the drawings, wherein:
Fig. 1 schematically shows a prior-art apparatus for vacuum skin packaging products provided with a conventional cutting unit;
Fig. 2 is a schematic representation of the cutting device of a VSP apparatus according to an embodiment of the present invention;

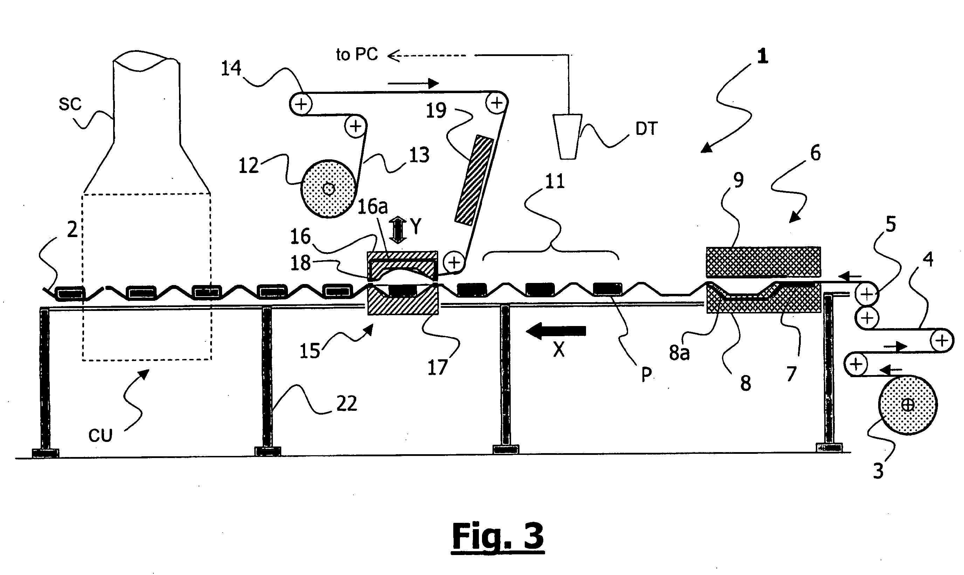

Fig. 3 schematically shows an apparatus for vacuum skin packaging products according to an embodiment of the invention;
Fig. 4A shows a layout of vacuum skin packaged products which are manufactured by a VSP packaging apparatus with a conventional cutting unit;
Fig. 4B shows a layout of vacuum skin packaged products which are cut by a cutting device according to the present invention; and
Fig. 5 is a plan view of a vacuum skin packaged product, which has been manufactured by a VSP apparatus according to the present invention, and which has been marked and further sealed.

The same reference numbers will be used through the following description for indicating the same or functionally equivalent parts.

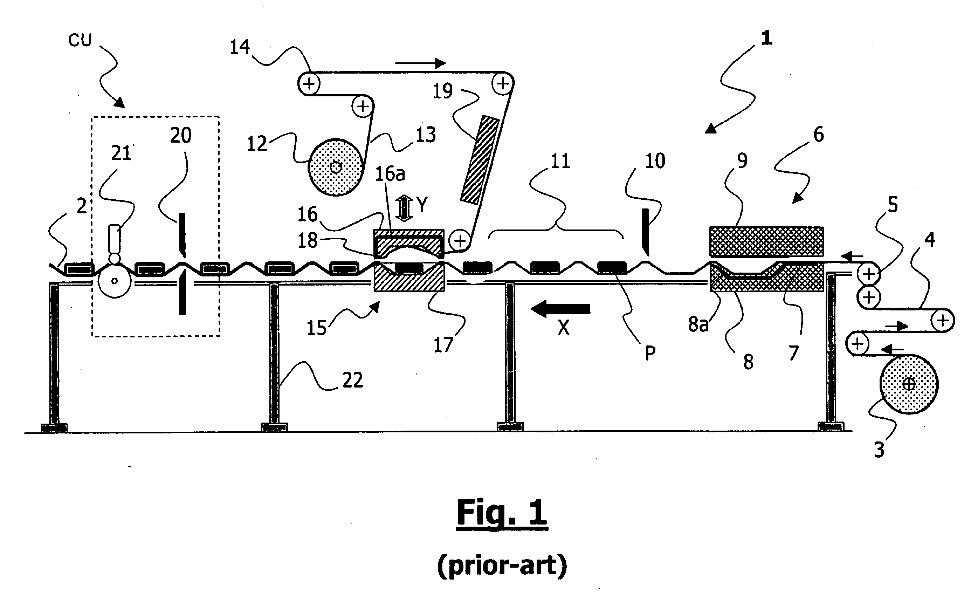

With first reference to Fig. 1, a prior-art apparatus 1 for vacuum skin packaging products P in packets 2 is shown. The working direction is indicated by arrow X and is from right to left in Fig. 1. The apparatus 1 comprises: a first reel 3 for the bottom web 4; a first pulley arrangement 5 for unwinding the bottom web 4; an on-line thermo-forming station 6 where the bottom web 4 is tray shaped; a corner cutting device section 10; a product placing area 11 where products P are placed onto the tray shaped web; a second reel 12 for the top web 13; a second pulley arrangement 14 for unwinding the top web 13; a skin (vacuum-sealing) station 15; a cross cutting unit 20; and a longitudinal cutting unit 21. A cutting unit, designed by reference number CU is shown in Fig. 1 through a box with dashed lines. A finished package 2 is finally obtained. A main frame 22 supports the above listed components.

Typically, the thermo-forming station 6 comprises a heating plate 7, a forming lower dome 8 containing a forming plate 8a and an upper dome 9. In one alternative embodiment not shown in Fig. 1 an upper second heating plate could be positioned parallel to the heating plate 7 to sandwich the sheet.

Typically, the corner cutting section 10, which however is an optional feature, comprises at least one cutting tool for performing precise angled short cuttings on the tray shaped bottom layer in order to allow easy opening of the end packages by the final consumers.

Typically, the skin station 15 comprises an upper dome 16 comprising a concave heated platen 16a and a bottom die 17 where molding plates, shaped as in the thermoforming station 6, can be inserted. A gasket 18 is arranged at the edge of either one or both the upper dome and the bottom die. Both the upper dome and the bottom die are provided with slits (not shown) for drawing vacuum and ventilating when the upper dome and the bottom die are closed.

The operation of the skin station is as follows. Before closing the upper dome and the bottom die, one or more lower web trays with products thereon are introduced. A length of upper web, possibly preheated by a pre-heating plate 19, is also drawn by the upper dome. When the upper dome and the bottom die are closed, vacuum from above draws the upper web into the dome while vacuum from below keeps the tray(s) into the mould. The upper web is heated up to a certain temperature (for instance, about 200°C) in the dome and air in the package is evacuated through slits in the lower web. When the vacuum in the space between the upper and lower webs is complete, a gentle ventilation from above causes the upper web to detach from the dome. Through full ventilation from above, the upper web is draped down over the product and sealed to the tray(s) all around the product while the tray(s) in the lower mould are stabilized by cooling. The bottom die is also ventilated and the sealing station is opened in order to move the sealed packages to the cross and longitudinal cutting stations, thus leaving the skin station ready for a new cycle.

The longitudinal cutting station 21 is provided as, generally, more than one tray is formed in a bottom web length. In other words, when the tray shaped bottom web is seen from above, a number of lanes of trays is seen.

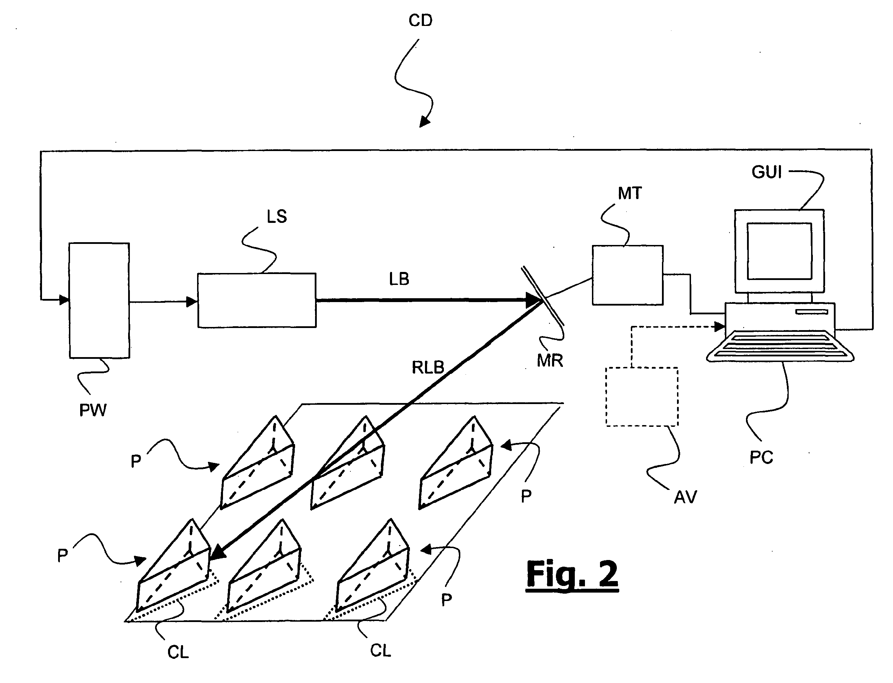

Fig. 2 shows, in a schematic manner, the cutting device CD that is used in a VSP packaging apparatus according to an embodiment of the present invention.

The cutting device CD comprises a laser source LS emitting a laser beam LB, a mirror MR (with gear means, not shown) and a motor MT for properly moving and inclinating the mirror MR. The emitted laser beam LB impinges against the mirror and directs the emitted laser beam LB towards the superimposed top and bottom webs (which indeed form a tight skin wherever the two webs contact each other) all around the packed products. The motor MT properly moves the mirror MR so that the reflected laser beam RLB is directed towards the superimposed webs to be cut. The cutting line is designed CL in Figure 2. The motor could indeed comprise more than one motor. A profitable arrangement is based on 3-axis scanning galvo-motors.

Profitably, the motor MT is driven by a computer PC.

Advantageously, the computer PC is associated to a display means, such as a displaying monitor.

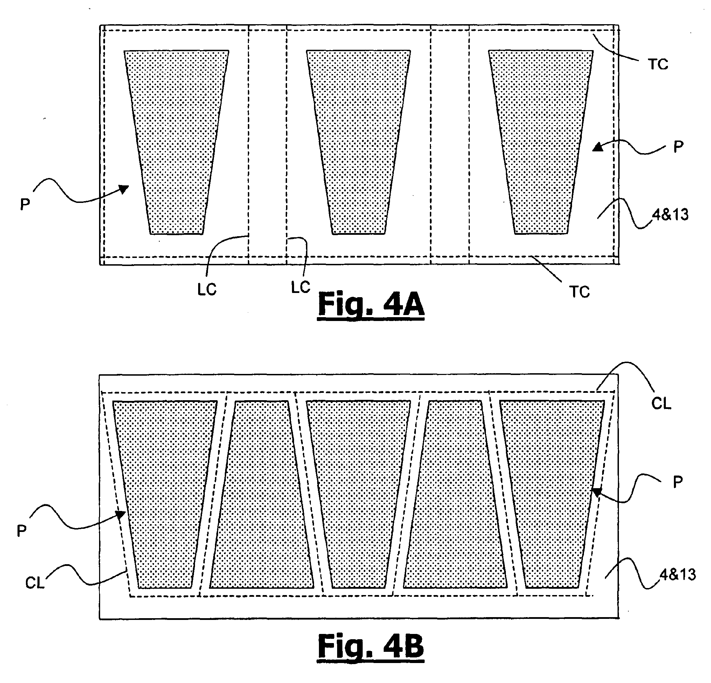

According to the present invention, an operator of the apparatus for vacuum skin packaging products can select a cutting line path which is adapted to properly cut the products which have been packed. With reference, for instance, to Figure 4B, if the products P are triangularly shaped, they could be arranged in an efficient manner. In that case, the cutting line (indicated by a dashed line) will comprise a number of cutting segments parallel to the product sides. The operator loads the cutting path in the computer PC and this will drive the motor accordingly so that a proper cutting line is obtained.

As an alternative, the cutting path and the cutting line could be generated automatically by an artificial vision arrangement AV. In this case, a proper detector DT detects the presence of products in a certain arrangement and it communicates such information to the computer PC. The computer, accordingly, selects a cutting path which generates an appropriate cutting line. The detector DT may profitably comprise a camera, either video or still camera. The detector DT can be arranged at the product loading station where the products are loaded (automatically or mechanically). The detector can also be arranged in a different position in the apparatus for vacuum skin packaging products of the present invention.

The laser cutting device according to the present invention results in a number of advantages. The cutting can be performed in a very precise manner and thus only a thin skirt can be left. In other words, it is no more necessary to have a wide skirt of superimposed webs 4&13 around the packed product as in the cutting arrangements according to the prior art. To give an idea, with the known mechanical cutting devices, due to the necessary presence of a counter-bar for the knives which takes some space between adjacent trays, it is almost impossible to have a remaining skirt around the product (after performing the cut) less than 7.5 mm wide. However, through the present invention, a width of the skirt as low as 1 or 2 mm can be obtained.

Just because of the possibility of getting packages with a very narrow skirt around the product, the laser cutting system of the present invention allow the manufacture of in-line thermoformed trays having the characteristics of pre-made trays, such as in particular trays ending with a rolled edge or secondary flange. The presence of the rolled edge or secondary flange is highly desirable as it increases rigidity and improves the overall apperance of the tray.

In case of special product shapes (as the triangularly shaped products of Figure 4A), the present invention obtains valuable advantages over the prior art. Figure 4A shows three products P after the skin station of an apparatus for vacuum skin packaging products. According to the known cutting arrangements, only longitudinal cuts LC and transverse cuts TC could be performed, such cuts producing rectangular packages. In view of the minimum required width of the skirt of superimposed webs 4&13, a large amount of web material is lost in the region where the triangularly shaped product tapers. Figure 4B shows that five triangularly shaped products can be arranged and cut by the cutting device of the VSP packaging apparatus of the present invention. This possibility results in a higher throughput, less waste of web material, higher pack appearance and less occupied space of the packed products (this is an advantageous feature for transporting and/or stoking packed products).

A more efficient use of packaging webs results also in cost savings and less environment impact.

Furthermore, whilst the known mechanical cutting arrangements highly limited the projecting height of the products from the bottom web, the novel laser cutting device according to the present invention allows to cut products which highly project from the bottom webs.

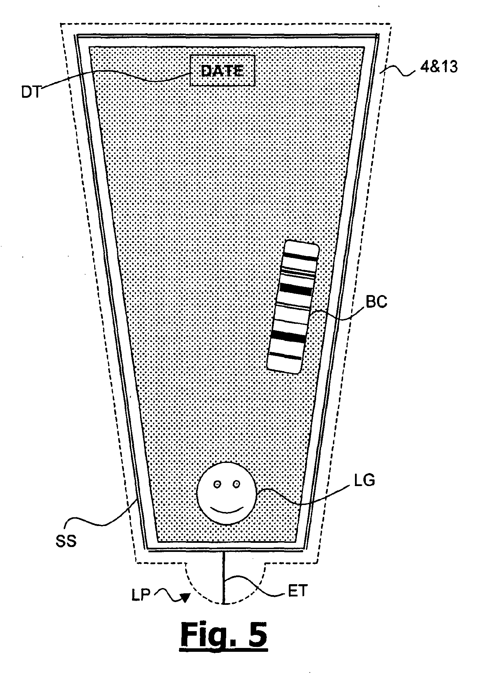

In Figures 2 and 4B a cutting path with cutting lines following the shape of the product to be packed is shown. However, in some circumstances, the cutting line could not follow precisely the shape of the product. This could be the case for aesthetic reasons. In addition, the packager may desire to obtain lips or ears LP as in Figure 5.

The laser cutting device of the VSP packaging apparatus according to the present invention can be used also for producing small cuts, ET, as illustrated in Fig. 5, which create grasping tabs or, not shown in the Figures, for creating a weakness line in one corner of the package, e.g. by means of a series of perforations suitably distant one from the other, to allow selective breakage of only the lower, more rigid, web by bending, thus rendering the package easy to open. The creation of these weakness lines or discrete cuts in one corner of the packages, should they be desired, may also be created by a mechanical cutting device preferably at the forming station or anyway at any stage before the vacuum skin chamber. It is also possible to combine the process and apparatus of the present invention with other systems known to provide for easy-to-open VSP packages, such as for instance with the use of thin local seal inhibition tools, as described in WO 2004/074106, that prevent sealing of the bottom and top webs at an edge of the VSP package or at part thereof.

According to an advantageous embodiment of the present invention, the laser cutting device CD comprises an electrical power supply PW which provides at least a first electrical power and at least a second electrical power. The laser source, correspondingly, emits a laser beam at a first optical power when it is powered at the first electrical power and it emits a laser beam at a second optical power when it is powered at the second electrical power. The first optical power is adapted to perform a first operation, for instance for cutting the superimposed webs.

The at least one second optical power (which can be lower or higher than the first one) can be used for performing a second operation. For instance, the laser source LS, when fed by the second electrical power, can emit a laser beam to produce a safety sealing SS all around the product, which safety sealing profitably follows the cutting lines. The safety sealing is shown in Figure 5 by a dual line. Such a safety sealing is useful, for instance, when certain sharpened products are packed (an example of sharpened product could be shell sea food). Such sharpened products tend to perforate the webs when a high vacuum is drawn in the sealing station. In order to overcome the problem, a lower vacuum is drawn and a further safety sealing is performed either after or before cutting.

The change of power is driven by the computer PC as it is shown in Figure 2. The operator can easily design the path of the cutting line and of the further safety sealing through a graphic user interface GUI.

The second operation can comprise marking/engraving the web covering the product. For example, a logo LG (and/or text matter) can be engraved on the top web or on both top and bottom webs. As a further example, a bar code BC can also be engraved on the top web or on both top and bottom webs. Profitably, a date DT (either packaging date or "best before" date) can be engraved on the top web or on both top and bottom webs. The position of logo, bar code and date can be profitably computer designed through the graphic user interface GUI. A software program can be stored in the computer PC for managing the laser source power.

In an advantageous embodiment, a software program is also provided in the computer PC for modifying the emitted laser beam speed. This can be made by properly driving the motor MT for moving and tilting the mirror MR accordingly. Similarly to what said above in connection with power changes, a first emitted laser beam speed can be provided for performing a first operation and a second emitted laser beam speed can be provided for performing a second operation.

In an advantageous embodiment, a software program is also provided in the computer PC for suitably modifying the emitted laser beam pulse frequency. Similarly to what said above in connection with power changes, a first emitted laser beam pulse frequency can be provided for performing a first operation and a second emitted laser beam pulse frequency can be provided for performing a second operation.

For safety reasons, at least part of the cutting device of the VSP packaging apparatus of the present invention (at least from the mirror to the working area and generally from the laser source to the mirror and to the working area) has to be closed in a laser shielded box or analogous shielding equipment, typically of transparent material.

Profitably, a suction arrangement SC can be provided for suctioning any combustion gas produced when the cuts are performed.

A laser source which has been deemed adapted to the present invention is available through Rofin GmbH and a customized laser system can suitably be obtained by any engineering company operating in this field, such as for instance AM engineering S.r.l. of Amaro, Italy. Some characteristics of such a laser source are listed in the following table 1:

**Table 1**

| | **Low Power** | **Medium Power** | **High Power** |
|---|---|---|---|
| Technology | CO₂ sealed-off RF discharge excited laser sources | | |
| Wavelength [µm] | 10.4 - 11.2 | 10.4 - 11.2 | 10.4 - 11.2 |
| Typical emitted optical power [W] | 120 | 260 | 380 |
| Power Stability | ± 5% | ± 7% | ± 7% |
| Peak Power [W] | > 230 | > 480 | > 750 |
| Frequency pulse Repetition [KHz] | 0.1 - 50 | 0.1 - 50 | 0.1 - 50 |
| Mode Quality [M²] | < 1.25 | < 1.25 | < 1.25 |
| Ellipticity | < 1.20 | < 1.20 | < 1.20 |
| Polarization | Linear | linear | Linear |
| Cooling | H₂O closed loop | H₂O closed loop | H₂O closed loop |

Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the scope of the invention as defined by the appended claims are deemed to be covered by the invention.

## Claims

1. A vacuum skin packaging apparatus for vacuum skin packaging products (P) and obtaining packets (2) by a single skin cycle, the apparatus comprising:
- a loading station (11) wherein the products (P) to be packaged are arranged on a bottom thermoplastic web (4), the products (P) being suitably spaced arranged;
- a skin station (15) wherein i) a top thermoplastic web (13) is positioned above said products (P), ii) said top thermoplastic web (13) is heated, iii) a vacuum between said top thermoplastic web (13) and said bottom thermoplastic web (4) is applied and iv) the top thermoplastic web (13) is drawn over and all around the products (P) thus sealing wherever the two webs contact each other; and
- a cutting tation (CU) wherein the packaged products (P) are separated by cutting the superimposed and sealed webs;
said apparatus being **characterized in that** said cutting station (CU) contains a cutting device (CD) which comprises a laser source (LS) producing a laser beam (LB) at a first optical power and means (MR,MT) for directing said laser beam (LB) at said first optical power towards the area where the two webs contact each other in a manner that the reflected laser beam (RLB) at said first optical power follows a predetermined path (CL) so that the two webs become cut and the products (P) become packaged singularly.

2. The vacuum skin packaging apparatus according to claim 1, wherein said means for directing said laser beam (LB) comprises at least a mirror (MR) and at least a motor (MT).

3. The vacuum skin packaging apparatus according to claim 2, wherein it further comprises a computer (PC) driving the operation of said at least one motor (MR) for changing speed of the emitted laser beam (LB) accordingly.

4. The vacuum skin packaging apparatus according to any of the previous claims, wherein said laser source (LS) is also adapted to emit a laser beam (LB) at a second optical power.

5. The vacuum skin packaging apparatus according to claim 4, wherein said laser source (LS) is powered by a power supply (PW) providing at least a first electrical power and a second electrical power so that the laser source (LS) emits at least the laser beam (LB) at the first optical power and the laser beam (LB) at the second optical power.

6. The vacuum skin packaging apparatus according to any of the previous claims, wherein means are provided for modifying an emitted laser beam pulse frequency.

7. The vacuum skin packaging apparatus according to any of the previous claims, wherein it further comprises an artificial vision device (DT) detecting at least one of the size, the shape and the arrangement of the products (P) and feeding such information to the computer (PC) in order to generate a proper cutting path.

8. The vacuum skin packaging apparatus according to any of the preceding claims, wherein said laser beam (LB) is also adapted to cut small cuts (ET) for providing an easy to open packet.

9. The vacuum skin packaging apparatus according to any of the preceding claims, wherein said laser beam (LB) is also adapted to provide a safety sealing (SS) along at least a portion of the packet edge.

10. The vacuum skin packaging apparatus according to any of the preceding claims, wherein said laser beam (LB) is also adapted to mark a logo (LG) or text matter or a date (DT) or a bar code (BC) on at least one of the webs covering the product.

11. A process for vacuum skin packaging products and obtaining packets by a single skin cycle, the process comprising: placing the products (P) to be packaged on a bottom thermoplastic web (4), the products (P) being suitably spaced arranged; positioning a top thermoplastic web (13) above said products (P); heating said top thermoplastic web (13); drawing a vacuum between said top thermoplastic web (13) and said bottom thermoplastic web (4); drawing the top thermoplastic web (13) over and all around the products (P), thus sealing wherever the two webs contact each other; and separating the packaged products (P) by cutting the superimposed and sealed webs; said process being **characterized in that** said cutting is performed by directing a laser beam (LB) by at least a mirror (MR) and at least a motor (MT).

12. The process according to claim 11, wherein it further comprises driving the operation of said at least one motor (MT) by a computer (PC) for changing the speed of the emitted laser beam (LB) accordingly.

13. The process according to any of claims 11 or 12, wherein it further comprises detecting at least one of a size, a shape and an arrangement of the products by an artificial vision device (DT) and feeding such information to the computer (PC) in order to generate a proper cutting path.

14. The process according to any of claims 11 to 13 further **characterized in that** the thermoplastic bottom web (4) is thermoformed in-line, before placing thereon the products (P) to be packaged, to a tray with a secondary flange.

15. The process of claim 14 wherein the laser cutting step is performed so as to leave a skirt around the secondary flange ≤ 2 mm.

## Patentansprüche

1. Vakuum-Skin-Verpackungsvorrichtung für Vakuum-Skin-Verpackungsprodukte (P) und zum Erhalten von Paketen (2) durch einen einzigen Skin-Zyklus, wobei die Vorrichtung aufweist:
Eine Ladestation (11), in der die zu verpackenden Produkte (P) auf einer thermoplastischen Bodenbahn (4) angeordnet werden, wobei die Produkte (P) in geeigneten Abständen zueinander angeordnet werden,
eine Skin-Station (15), in der i) eine obere thermoplastische Bahn (13) über die Produkte (P) gelegt wird, ii) die obere thermoplastische Bahn (13) erhitzt wird, iii) zwischen der oberen thermoplastischen Bahn (13) und der thermoplastischen Bodenbahn (4) ein Unterdruck angelegt wird und iv) die obere thermoplastische Bahn (13) über und um die Produkte (P) herum gezogen wird, wodurch die zwei Bahnen, wo immer sie Kontakt miteinander haben, aneinander gesiegelt werden, und
eine Schneidstation (CD), in der die verpackten Produkte (P) voneinander getrennt werden, indem die darübergelegten und gesiegelten Bahnen durchschnitten werden,
wobei die Vorrichtung **dadurch gekennzeichnet ist, dass** die Schneidestation (CD) eine Schneideinrichtung (CD) enthält, die eine Laserquelle (LS), welche einen Laserstrahl (LB) bei einer ersten optischen Leistung erzeugt, und Einrichtungen (MR, MT) zum Richten des Laserstrahls (LB) mit der ersten optischen Leistung auf das Gebiet, wo die beiden Bahnen Kontakt miteinander haben, in der Weise aufweist, dass der reflektierte Laserstrahl (RLB) mit der ersten optischen Leistung einem vorgegebenden Weg (CL) folgt, so dass die beiden Bahnen durchschnitten werden und die Produkte (P) als einzeln verpackte Produkte erhalten werden.

2. Vakuum-Skin-Verpackungsvorrichtung nach Anspruch 1, wobei die Einrichtungen zum Richten des Laserstrahls (LB) wenigstens einen Spiegel (MR) und wenigstens einen Motor (MT) aufweisen.

3. Vakuum-Skin-Verpackungsvorrichtung nach Anspruch 2, wobei sie weiter einen Computer (PC) aufweist, der den Betrieb des wenigstens einen Motors (MR) steuert, um die Geschwindigkeit des abgestrahlte Laserstrahls (LB) entsprechend zu steuern.

4. Vakuum-Skin-Verpackungsvorrichtung nach einem der vorhergehenden Ansprüche, wobei die Laserquelle (LS) dazu angepasst ist, auch einen Laserstrahl (LB) mit einer zweiten optischen Leistung abzustrahlen.

5. Vakuum-Skin-Verpackungsvorrichtung nach Anspruch 4, wobei die Laserquelle (LS) durch eine Energieversorgung (PW) mit Energie versorgt wird, die wenigstens eine erste elektrische Leistung und eine zweite elektrische Leistung liefert, so dass die Laserquelle (LS) den wenigstens einen Laserstrahl (LB) mit einer ersten optischen Leistung und den Laserstrahl (LB) mit der zweiten optischen Leistung ausstrahlt.

6. Vakuum-Skin-Verpackungsvorrichtung nach einem der vorhergehenden Ansprüche, wobei Einrichtungen vorgesehen sind, um eine Impulsfrequenz des abgestrahlten Laserstrahls zu modifizieren.

7. Vakuum-Skin-Verpackungsvorrichtung nach einem der vorhergehenden Ansprüche, wobei sie weiter eine Einrichtung zur künstlichen Sichtung (DT) aufweist, die wenigstens eines von der Größe, der Form und der Anordnung der Produkte (P) erfasst und diese Information zu dem Computer (PC) weiterleitet, damit ein geeigneter Schneidweg erzeugt wird.

8. Vakuum-Skin-Verpackungsvorrichtung nach einem der vorhergehenden Ansprüche, wobei der Laserstrahl (LB) auch dazu angepasst ist, um kleine Schnitte (ET) zu schneiden, um ein leicht zu öffnendes Paket bereitzustellen.

9. . Vakuum-Skin-Verpackungsvorrichtung nach einem der vorhergehenden Ansprüche, wobei der Laserstrahl (LB) auch dazu angepasst ist, eine Sicherheitssiegelung (SS) entlang wenigstens eines Bereichs der Paketkante bereitzustellen.

10. Vakuum-Skin-Verpackungsvorrichtung nach einem der vorhergehenden Ansprüche, Wobei der Laserstrahl (LB) auch dazu angepasst ist, ein Logo (LG) oder Text oder ein Datum (DT) oder einen Strichcode (BC) auf wenigstens einer der das Produkt bedeckenden Bahnen aufzubringen.

11. Verfahren zum Vakuum-Skin-Verpacken von Produkten und zum Erhalten von Paketen mit einen einzelnen Skin-Zyklus, wobei bei dem Verfahren: Zu verpackende Produkte (P) auf eine thermoplastische Bodenbahn (4) platziert werden, wobei die Produkte (P) in geeignetem Abstand zueinander angeordnet werden, eine obere thermoplastische Bahn (13) über den Produkten (P) platziert wird, die obere thermoplastische Bahn (13) erhitzt wird, zwischen der oberen thermoplastischen Bahn (13) und der thermoplastischen Bodenbahn (4) ein Unterdruck erzeugt wird, die obere thermoplastische Bahn (13) über und um die Produkte (P) herum gezogen wird, wodurch die beiden Bahnen in allen Bereichen, in denen sie Kontakt miteinander haben, mit einander verbunden werden, und die verpackten Produkte (P) separiert werden, indem die übereinanderliegenden und miteinander verbundenen Bahne geschnitten werden, wobei das Verfahren **dadurch gekennzeichnet ist, dass** das Schneiden durch Richten eines Laserstrahls (LB) mittels wenigstens eines Spiegels (MR) und wenigstens eines Motors (MT) durchgeführt wird.

12. Verfahren nach Anspruch 11, wobei bei dem Verfahren weiter der Betrieb des wenigstens einen Motors (MT) durch einen Computer (PC) gesteuert wird, um die Geschwindigkeit des abgestrahlten Laserstrahls (LB) dementsprechend zu ändern.

13. Verfahren nach einem der Ansprüche 11 oder 12, wobei bei dem Verfahren weiter wenigstens eines von einer Größe, einer Form und einer Anordnung der Produkte durch eine künstliche Sichtungseinrichtung (DT) erfasst wird und diese Information zu dem Computer (PC) weitergeleitet wird, um einen geeigneten Schneidweg zu erzeugen.

14. Verfahren nach einem der Ansprüche 11 bis 13, weiter **dadurch gekennzeichnet, dass** die thermoplastische Bodenbahn (4) durch Inline-Thermoformen zu einer Schale mit einem sekundären Flansch geformt wird, bevor die zu verpackenden Produkte (P) darauf platziert werden.

15. Verfahren nach Anspruch 14, wobei der Schritt des Laserschneidens so ausgeführt wird, dass eine Randleiste um den sekundären Flansch von ≤ 2 mm gelassen wird.

## Revendications

1. Suremballeuse sous vide pour suremballer sous vide des produits (P) et obtenir des paquets (2) par un seul cycle d'emballage, l'appareil comprenant:
- une station de chargement (11) dans laquelle les produits (P) à emballer sont agencés sur une bande thermoplastique inférieure (4), les produits (P) étant espacés d'une manière appropriée;
- une station d'emballage (15) dans laquelle i) une bande thermoplastique supérieure (13) est positionnée au-dessus desdits produits (P), ii) ladite bande thermoplastique supérieure (13) est chauffée, iii) un vide entre ladite bande thermoplastique supérieure (13) et ladite bande thermoplastique inférieure (4) est appliquée et iv) la bande thermoplastique supérieure (13) est tirée sur et tout autour des produits (P) en scellant ainsi partout où les deux bandes viennent en contact; et
- une station de coupe (CU) dans laquelle les produits emballés (P) sont séparés en coupant les bandes superposées et scellées;
ledit appareil étant **caractérisé en ce que** ladite station de coupe (CU) contient un dispositif de coupe (CD) qui comprend une source laser (LS) produisant un faisceau laser (LB) à une première puissance optique et des moyens (MR, MT) pour diriger ledit faisceau laser (LB) à ladite première puissance optique vers la zone où les deux bandes viennent en contact de telle manière que le faisceau laser réfléchi (RLB) à ladite première puissance optique suit un chemin prédéterminé (CL) de sorte que les deux bandes sont coupées et que les produits (P) sont emballés individuellement.

2. Suremballeuse sous vide selon la revendication 1,
dans laquelle ledit moyen pour diriger ledit faisceau laser (LB) comprend au moins un miroir (MR) et au moins un moteur (MT).

3. Suremballeuse sous vide selon la revendication 2,
dans laquelle elle comprend en outre un ordinateur (PC) entraînant le fonctionnement dudit au moins un moteur (MR) pour changer la vitesse du faisceau laser émis (LB) d'une manière correspondante.

4. Suremballeuse sous vide selon l'une quelconque des revendications précédentes, dans laquelle ladite source laser (LS) est également apte à émettre un faisceau laser (LB) à une deuxième puissance optique.

5. Suremballeuse sous vide selon la revendication 4,
dans laquelle ladite source laser (LS) est alimentée par une alimentation (PW) fournissant au moins une première puissance électrique et une deuxième puissance électrique de sorte que la source laser (LS) émet au moins le faisceau laser (LB) à la première puissance optique et le faisceau laser (LB) à la deuxième puissance optique.

6. Suremballeuse sous vide selon l'une quelconque des revendications précédentes, dans laquelle des moyens sont prévus pour modifier une fréquence d'impulsions du faisceau laser émis.

7. Suremballeuse sous vide selon l'une quelconque des revendications précédentes, dans laquelle elle comprend en outre un dispositif de vision artificielle (DT) détectant au moins un parmi la taille, la forme et l'agencement des produits (P) et transmettant ces informations à l'ordinateur (PC) pour produire un chemin de coupe approprié.

8. Suremballeuse sous vide selon l'une quelconque des revendications précédentes, dans laquelle ledit faisceau laser (LB) est également apte à réaliser de petites coupes (ET) pour fournir un paquet à ouverture faciale.

9. Suremballeuse sous vide selon l'une quelconque des revendications précédentes, dans laquelle ledit faisceau laser (LB) est également conçu pour réaliser un scellement de sécurité (SS) le long d'au moins une portion du bord du paquet.

10. Suremballeuse sous vide selon l'une quelconque des revendications précédentes, dans laquelle ledit faisceau laser (LB) est également apte à marquer un logo (LG) ou une matière texte ou une date (DT) ou un code à barres (BC) sur au moins une des bandes couvrant le produit.

11. Procédé de suremballage sous vide de produits et d'obtention de paquets par un seul cycle d'emballage, le procédé comprenant: placer les produits (P) à emballer sur une bande thermoplastique inférieure (4), les produits (P) étant espacés d'une manière appropriée; positionner une bande thermoplastique supérieure (13) au-dessus desdits produits (P); chauffer ladite bande thermoplastique supérieure (13); établir un vide entre ladite bande thermoplastique supérieure (13) et ladite bande thermoplastique inférieure (4), tirer la bande thermoplastique supérieure (13) sur et tout autour des produits (P) en établissant ainsi une étanchéité à tout endroit où les deux bandes viennent en contact; et séparer les produits emballés (P) en coupant les bandes superposées et scellées; ledit procédé étant **caractérisé en ce que** ladite coupe est exécutée en dirigeant un faisceau laser (LB) par au moins un miroir (MR) et au moins un moteur (MT).

12. Procédé selon la revendication 11, dans lequel il comprend en outre l'entraînement de l'opération dudit au moins un moteur (MT) par un ordinateur (PC) pour changer la vitesse du faisceau laser émis (LB) d'une manière correspondante.

13. Procédé selon l'une quelconque des revendications 11 ou 12, dans lequel il comprend en outre la détection d'au moins un parmi une taille, une forme et un agencement des produits par un dispositif de vision artificielle (DT) et l'amenée de ces informations à l'ordinateur (PC) pour produire un chemin de coupe approprié.

14. Procédé selon l'une quelconque des revendications 11 à 13, **caractérisé en outre en ce que** la bande thermoplastique inférieure (4) est thermoformée en ligne avant de placer sur celle-ci les produits (P) à emballer, en un plateau avec une bride secondaire.

15. Procécé selon la revendication 14, dans lequel l'étape de coupe au laser est exécutée de manière à laisser subsister une collerette autour de la bride secondaire de ≤ 2 mm.
